Europäisches Patentamt

European Patent Office

Office européen des brevets

(19)

(11) Veröffentlichungsnummer: **0 038 515 B1**

# (12) EUROPÄISCHE PATENTSCHRIFT

(45) Veröffentlichungstag der Patentschrift:
20.11.86

(21) Anmeldenummer: **81102854.7**

(22) Anmeldetag: **14.04.81**

(51) Int. Cl.⁴: **H 04 N 1/40**, G 03 F 1/00

(54) **Verfahren und Vorrichtung zum Abbilden einer Vorlage auf einem Ausgabemedium.**

(30) Priorität: **23.04.80 US 142884**

(43) Veröffentlichungstag der Anmeldung:
**28.10.81 Patentblatt 81/43**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**FR - A - 2 264 662**
**US - A - 3 848 083**
**US - A - 4 081 842**
**US - A - 4 131 916**

(73) Patentinhaber: **THE GERBER SCIENTIFIC INSTRUMENT COMPANY, 83 Gerber Road, South Windsor, CT 06074 (US)**

(72) Erfinder: **Lew, Yung, 10422 Kamuela Drive, Huntington Beach California 92646 (US)**

(74) Vertreter: **Patentanwälte Kohler - Schwindling - Späth, Hohentwielstrasse 41, D-7000 Stuttgart 1 (DE)**

## Beschreibung

Die Erfindung betrifft ein Verfahren zum Abbilden einer Vorlage auf einem Ausgabemedium, mit den folgenden Verfahrensschritten: Abtasten der Vorlage entlang aufeinanderfolgender Abtastzeilen;

Erzeugen eines Videosignales in Abhängigkeit von der abgetasteten Vorlage;

Erzeugen von ersten und zweiten, gegeneinander um eine vorbestimmte Phase versetzten Taktsignalen gleicher Frequenz;

taktweises Ausgeben des Videosignales in aufeinanderfolgenden Abtastzeilen in Abhängigkeit von dem ersten bzw. zweiten Taktsignal $\Phi_1$, $\Phi_2$ als Ausgangssignale, die von Abtastzeile zu Abtastzeile um die Phase versetzt sind;

Ablenken eines Schreibstrahles entlang aufeinanderfolgender Zeilen des Ausgabemediums;

Modulieren des Schreibstrahles in aufeinanderfolgenden Zeilen in Abhängigkeit von den Ausgangssignalen derart, dass die Vorlage auf dem Ausgabemedium in einer Weise abgebildet wird, bei der benachbarte, die Abbildung darstellende Zeilen gegeneinander um die Phase versetzt sind.

Die Erfindung betrifft ferner eine Vorrichtung zum Abbilden einer Vorlage auf einem Ausgabemedium, mit einer ersten Einrichtung zum Abtasten der Vorlage entlang aufeinanderfolgender Abtastzeilen, mit Mitteln zum Erzeugen eines Videosignales in Abhängigkeit von der abgetasteten Vorlage, mit einem Taktgenerator zum Erzeugen zweier gegeneinander um eine vorbestimmte Phase versetzter Taktsignale gleicher Frequenz, mit Mitteln zum taktweisen Ausgeben des Videosignales in aufeinanderfolgenden Abtastzeilen in Abhängigkeit von dem ersten bzw. zweiten Taktsignal als Ausgangssignale, die von Abtastzeile zu Abtastzeile um die Phase versetzt sind, mit einer Abtastvorrichtung zum Ablenken eines Schreibstrahles entlang aufeinanderfolgender Zeilen des Ausgabemediums und mit einem Modulator zum Modulieren des Schreibstrahles in aufeinanderfolgenden Zeilen in Abhängigkeit von den Ausgangssignalen derart, dass die Vorlage auf dem Ausgabemedium in einer Weise abgebildet wird, bei der benachbarte, die Abbildung darstellende Zeilen gegeneinander um die Phase versetzt sind.

Ein derartiges Verfahren und eine derartige Vorrichtung sind in der US-A-3 848 083 beschrieben.

Bei der bekannten Vorrichtung wird ein von einer Abtastvorrichtung erzeugtes Videosignal digitalisiert und einer Zeitquantisierungsstufe zugeführt. Das Ausgangssignal eines Taktgenerators wird einmal einem Steuereingang der Zeitquantisierungsstufe und zum anderen einer Zeitbasisschaltung zugeführt, die Ausgangssignale erzeugt, die durch Multiplikation aus dem Ausgangssignal des Taktgenerators abgeleitet sind. Eines dieser Signale der Zeitbasis dient zum Ablenken der Abtasteinrichtung sowie zum Ansteuern eines Zähler-Flip-Flops, dessen Ausgang ebenfalls einem Steuereingang der Zeitquantisierungsstufe zugeführt wird. Die Zeitquantisierungsstufe hat dabei die Wirkung, dass in Abhängigkeit vom Ausgangssignal des Zähler-Flip-Flops das digitalisierte Videosignal von Zeile zu Zeile jeweils phasenversetzt ausgegeben wird.

Bei der bekannten Vorrichtung sind im Empfängerteil entsprechende Re-Synchronisiereinrichtungen vorgesehen.

Auf diese Weise soll erreicht werden, dass die Schwarz-Weiss-Muster entlang aufeinanderfolgender Abtastzeilen jeweils um eine vorbestimmte Phase gegeneinander versetzt sind, so dass in der Empfängerstation die übertragenen Signale keine Abbildung erzeugen, deren Ränder in vertikaler Richtung linear verlaufen, sondern von Zeile zu Zeile gegeneinander versetzt sind, so dass der Eindruck einer weit höheren Auflösung entsteht.

Bei der bekannten Vorrichtung wird eine Synchronisierung des Abtastvorganges in der Leseeinrichtung zur Erzeugung der Taktsignale in der erwähnten Weise dadurch erreicht, dass beide Elemente in Abhängigkeit von einem gemeinsamen Taktgenerator betätigt werden. Dies ist jedoch in manchen Anwendungsfällen nachteilig, beispielsweise dann, wenn man die Abtastgeschwindigkeit an der Abtasteinheit selbst ändern möchte oder auch dann, wenn bei der Erzeugung und Ablenkung des Lesestrahles Nichtlinearitäten auftreten. In diesen Fällen tritt eine gewisse Konkurrenz zwischen dem Taktgenerator und der daran starr gekoppelten Erzeugung der Taktsignale einerseits und dem Ablenkungsvorgang der Leseeinrichtung andererseits auf.

Der Erfindung liegt daher die Aufgabe zugrunde, eine Vorrichtung bzw. ein Verfahren der eingangs genannten Art dahingehend weiterzubilden, dass die Erzeugung der Taktsignale stets allen gewollten oder ungewollten Änderungen im Bereiche der Lese-Abtast-Einrichtung folgt.

Diese Aufgabe wird gemäss dem eingangs genannten Verfahren dadurch gelöst, dass zusammen mit der Vorlage eine Bezugsmaske abgetastet wird, dass ein Referenzsignal in Abhängigkeit von der Position der Abtastung erzeugt wird und dass die Taktsignale von dem Referenzsignal abgeleitet werden.

Gemäss der eingangs genannten Vorrichtung wird diese Aufgabe dadurch gelöst, dass eine Bezugsmaske und eine zweite Einrichtung zum Abtasten der Bezugsmaske zusammen mit dem Abtasten der Vorlage vorgesehen sind, wobei die zweite Einrichtung ein Referenzsignal in Abhängigkeit von der Position der Abtastung erzeugt, und dass das Referenzsignal dem Taktgenerator zum Erzeugen der Taktsignale zugeführt wird.

Die der Erfindung zugrundeliegende Aufgabe wird damit vollkommen gelöst, weil die Abtastvorrichtung zugleich die Vorlage wie auch die Bezugsmaske abtastet, so dass alle gewollten oder ungewollten Verstellungen der Abtastvorrichtung sich gleichermassen auf den Abtastvorgang bei der Vorlage und den Abtastvorgang an der Bezugsmaske auswirken. Die Synchronisierung des Vorganges über die Taktsignale ist daher stets vollkommen gewährleistet.

Die Erfindung findet im allgemeinen Anwendung bei Systemen und Verfahren zur Abbildung von Vorlagen durch Abtastung, wie beispielsweise in einem Lasergraviersystem und insbesondere bei einem System und bei einem Verfahren zum Eliminieren der Moiré-Interferenz bei der Abbildung von gerasterten Bildern.

In jüngerer Zeit werden Lasergraviersysteme zur Herstellung von Druckplatten für den Zeitungsdruck und dergleichen eingesetzt. In derartigen Systemen kann die gesamte Vorlage oder ein beliebiger Teil der Vorlage, die gedruckt werden soll, durch Abtasten der auf einem Kopiertisch befindlichen Vorlage eingegeben werden oder durch direkte Eingabe von einem Rechner oder einer sonstigen geeigneten Quelle in das System verarbeitet werden. Die eingegebene Information wird entweder gespeichert oder unmittelbar zur Steuerung der Modulation eines Laserstrahls verwendet, der das Ausgabemedium zum Abbilden des gewünschten Bildes der Vorlage abtastet.

Wird ein gerastertes Bild abgetastet, so weist das resultierende Videosignal ein Frequenzspektrum auf, das sich nahe einer Hauptfrequenz konzentriert. Wird das Videosignal mit einer konstanten Frequenz abgetastet, so werden eine oder mehrere Schwebefrequenzen zwischen dem Videosignal und der Abtastfrequenz erzeugt. Diese Schwebefrequenzen können Anlass zu einer Interferenz in Form von wellenförmigen Mustern sein, die allgemein als Moiré-Muster bekannt sind und mit freiem Auge im ausgegebenen Bild erkennbar sind.

Es wurden verschiedene Versuche unternommen, um diese Moiré-Interferenz gerasterter Bilder durch Erhöhung der Abtastfrequenz zu beseitigen, da dadurch die Grösse der durch die Schwebefrequenzen erzeugten Störungen kleingehalten wird und daher im Ausgabebild nicht mehr sichtbar sind. Während diese Technik in einigen Anwendungsfällen zu zufriedenstellenden Ergebnissen führte, ist es nicht immer erwünscht, die Abtastfreuqenz zu erhöhen, da eine höhere Abtastfrequenz entweder eine längere Übertragungszeit für das Bild erfordert oder zu einem höheren Signal-Rausch-Verhältnis in der Übertragung der Abtastfrequenz führt und dadurch das benutzte Übertragungsfrequenzband nicht mehr ausreichen kann.

Durch die eingangs genannte Erfindung werden diese Nachteile, die im Stand der Technik bekannt sind, nachhaltig gelöst.

Weitere vorteilhafte Ausgestaltungen der Erfindung sind den Unteransprüchen zu entnehmen.

Weitere Einzelheiten der Erfindung werden anhand eines in den Zeichnungen dargestellten Ausführungsbeispiels beschrieben.

Es zeigen:

Fig. 1 ein Blockschaltbild eines ersten Teiles eines Lasergraviersystems nach der Erfindung;

Fig. 2 ein Blockschaltbild eines zweiten Teiles des Lasergraviersystems nach Fig. 1;

Fig. 3 eine schematische Darstellung zur Veranschaulichung des Einflusses der Moiré-Interferenz in einem gerasterten Bild;

Fig. 4 eine graphische Darstellung der Bildung eines gerasterten Bildes, das nach dem Stand der Technik aufgezeichnet wird;

Fig. 5 eine graphische Darstellung der Abbildung eines gerasterte Bildes, das gemäss der Erfindung aufgezeichnet wird.

In den Zeichnungen ist die Erfindung in Verbindung mit einem Lasergraviersystem des Faksimile-Typs dargestellt, das im einzelnen in der US-A-4 081 842 beschrieben ist. In diesem System wird ein Umbruch oder eine sonstige geeignete Vorlage bzw. Eingabekopie 11 auf einem Kopiertisch 12 befestigt und rasterförmig durch einen Lesestrahl 13 eines Lasers 14 abgetastet. Eine Abtastvorrichtung 16 lenkt den Lesestrahl 13 zum Abtasten längs aufeinanderfolgender Linien auf der Eingabekopie ab und ein Strahlteiler 17 teilt den von der Abtastvorrichtung 16 kommenden Strahl in zwei Strahlen auf, nämlich in den Lesestrahl 13, der auf die Eingabekopie 11 auftrifft und in einen weiteren, nicht näher bezeichneten Strahl, der auf eine Bezugsmaske 26 gerichtet ist.

Eine Fiberoptik-Anordnung 18 empfängt Licht, das die Eingabekopie 11 von dem Lesestrahl 13 reflektiert. Diese Anordnung besteht aus einer Vielzahl von optischen Fichtensträngen, von denen die einen Enden in einer Linie zusammengefasst sind, die im wesentlichen parallel zu den Abtastlinien bzw. -zeilen auf der Eingabekopie ausgerichtet ist. Die anderen Enden der Fasersträng sind zusammengefasst und die Fiberoptik-Anordnung wirkt als ein Zeilen-zu-Punkt Umwandler. Das durch die Fiberoptik-Anordnung gesammelte Licht wird einem Fotovervielfacher 19 zugeleitet, um ein Videosignal zu erhalten, das der von der Eingabekopie gelesenen Information entspricht. Dieses Signal wird mit einer vorgegebenen Frequenz abgetastet und in Datenpuffern 21, 22 während des Übergangs von einer Abtastlinie zur nachfolgenden Abtastlinie gespeichert, wie dies im folgenden noch näher erläutert werden wird. Das System enthält eine Einrichtung zur Erzeugung von zwei Taktsignalen gleicher Taktfrequenz und entgegengesetzter Phasen, mit denen das vom Fotovervielfacher kommende Videosignal abgetastet wird. Diese Einrichtung umfasst die zuvor erwähnte Bezugsmaske 26, die einen Teilstrahl des Lesestrahls von dem Strahlteiler 17 empfängt. Diese Maske enthält eine alternierende Anordnung von Balken, die für den Lesestrahl lichtundurchlässig bzw. transparent sind. Wenn der Lesestrahl die Eingabekopie abtastet, liefert die Referenzmaske 26 ein Bezugssignal entsprechend der jeweiligen Lage des Lesestrahls. In der gezeigten Ausführungsform ist jeder der lichtundurchlässigen und transparenten Balken 0,254 mm (10 mils) breit und jeder der durch die Bezugsmaske 26 erzeugten Impulse entspricht einer Abtastlänge von 0,254 mm auf der Eingabekopie. Die von der Referenzmaske 26 erzeugten Pulse werden einer Vervielfachereinrichtung 27 zugeleitet, die beispielsweise in der dargestellten Ausführungsform die Pulsrate mit einem Faktor 20 multipliziert, so dass jeder Ausgangsimpuls der Vervielfachereinrichtung 27 einer Abtastlänge von 0,0127 mm (0,5 mil) auf der Eingabekopie 11 entspricht.

Der Ausgang der Vervielfachereinrichtung 27 ist mit dem Takteingang einer D-Flip-Flop-Schaltung 28 verbunden. Der Q-Ausgang dieser Flip-Flop-Schaltung ist mit deren D-Eingang verbunden und die Flip-Flop-Schaltung arbeitet als Kippschaltung, welche die Taktfrequenz durch einen Faktor 2 teilt, um ein erstes Taktsignal Φ1 mit einer Breite entsprechend 0,0254 mm (1 mil) auf der Eingabekopie 11 zu erzeugen.

Der Ausgang der Vervielfachereinrichtung 27 ist des weiteren mit dem Takteingang einer zweiten D-Flip-Flop-Schaltung 29 verbunden und das Taktsignal Φ1 wird dem D-Eingang dieser Flip-Flop-Schaltung 29 zugeführt. Der Ausgang der Flip-Flop-Schaltung 29 stellt ein zweites Taktsignal Φ2 dar, das die gleiche Frequenz wie das erste Taktsignal besitzt, jedoch gegenüber diesem um 180° phasenverschoben ist.

Das System enthält des weiteren eine Einrichtung, um jeweils die entsprechenden Taktsignale Puffern 21, 22 während alternierenden Linienabtastungen zuzuleiten. Diese Einrichtung umfasst eine Taktauswahlschaltung 31, welcher die Taktsignale zugeführt werden. Diese Taktauswahlschaltung 31 wird von einer Pufferauswahlschaltung 32 gesteuert, die Steuersignale liefert, um die Einspeisung von Signalen in einen der Puffer zu ändern, wenn bei der Abtastung von der einen Linie auf die benachbarte Linie gewechselt wird. Dies bedeutet, dass während einer Linienabtastung das Videosignal in den Puffer 21 in Übereinstimmung mit dem Taktsignal Φ1 und während der Abtastung der nächsten Linie in den Puffer 22 in Übereinstimmung mit dem Taktsignal Φ2 eingelesen wird. Die Daten werden aus den Puffern 21 und 22 in Übereinstimmung mit den entsprechenden Taktsignalen ausgelesen und einem Ausgangsanschluss 33 zur Übertragung an eine Empfangsstation zugeführt.

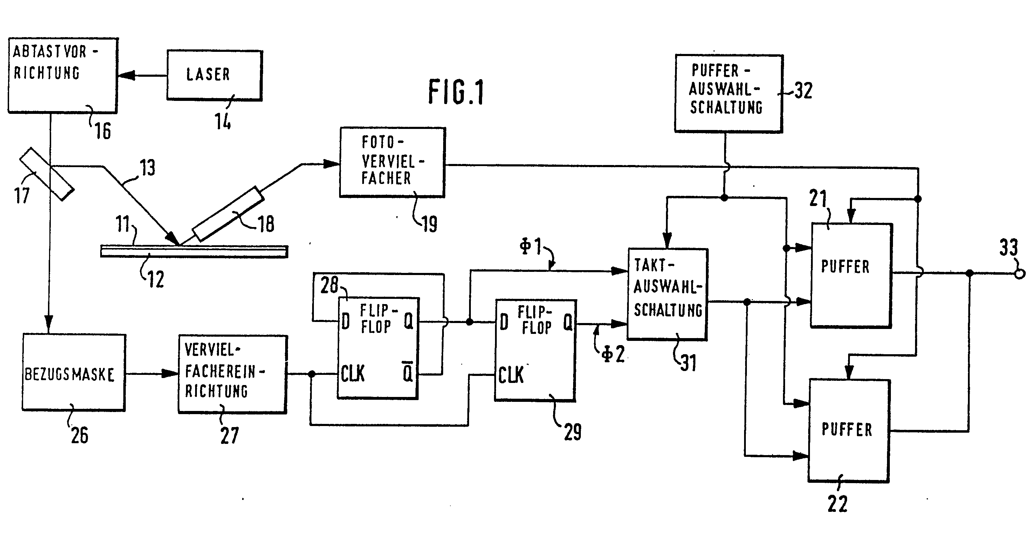

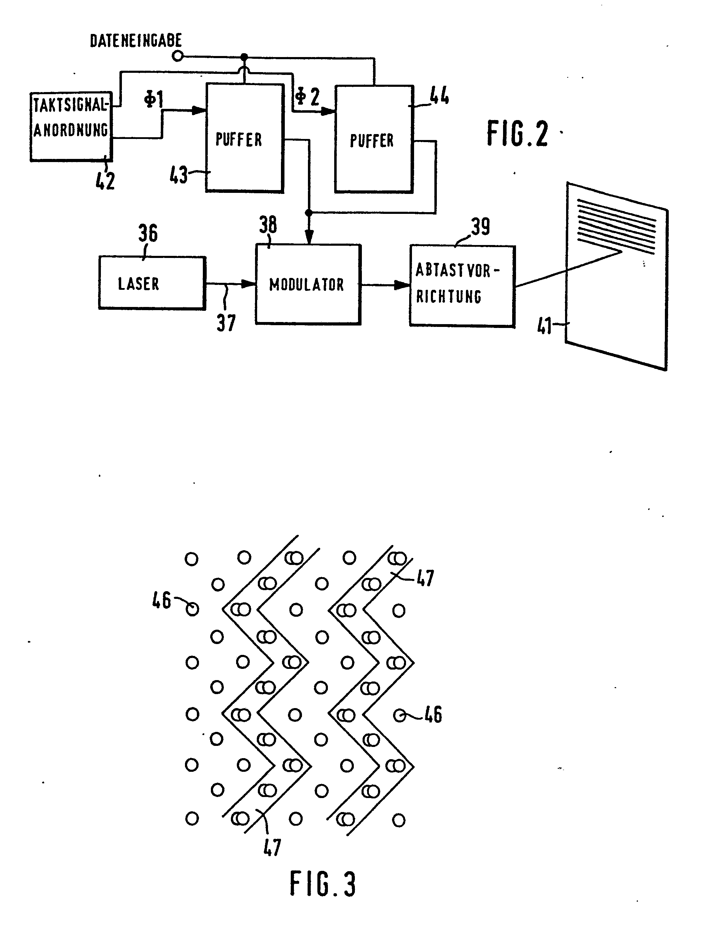

Die Empfangsstation, wie in Fig. 2 gezeigt, enthält einen Laser 36, der einen Schreibstrahl 37 erzeugt. Dieser Schreibstrahl 37 durchläuft einen akusto-optischen Modulator 38 in Richtung einer Abtastvorrichtung 39, die den Strahl rasterförmig entlang aufeinanderfolgender Linien oder Zeilen auf einer Druckplatte oder einem sonstigen geeigneten Ausgabemedium 41 ablenkt. Im Modulator 38 wird der Schreibstrahl in Übereinstimmung mit den Daten von den Puffern 43, 44 für aufeinanderfolgende Linien des auszugebenden Bildes moduliert. Die Daten werden aus diesen Puffern 43, 44 in Übereinstimmung mit Taktsignalen Φ1 und Φ2 ausgelesen, die in einer Anordnung 42 erzeugt werden, welche eine Bezugsmaske, einen Pulsfrequenzvervielfacher und Flip-Flop-Schaltungen ähnlich den Bauteilen 26–29 in der Lesestation des Lasergraviersystems nach Fig. 1 enthält. Zur besseren Übersichtlichkeit und Vereinfachung der Zeichnung sind diese Bauteile in Fig. 2, zusammengefasst in der Anordnung 42, dargestellt, ohne sie im einzelnen zu zeichnen.

Die Betriebsweise und die Anwendung des Systems und des Verfahrens nach der Erfindung wird unter Bezugnahme auf die Figuren 3–5 im folgenden erläutert.

Fig. 3 stellt die Art und Weise dar, in der eine Moiré-Interferenz beim Abtasten eines gerasterten Bildes entstehen kann. Das Bild besteht aus einer Anordnung von Punkten 46, die im Falle eines positiven Bildes dunkel sind. Schwebungen zwischen den Videofrequenzen und den Abtastfrequenzen können zu einer Vergrösserung einiger dieser Punkte führen, woraus sich dunkle wellenförmige Linien 47, die sogenannten Moiré-Muster im Ausgabebild ergeben.

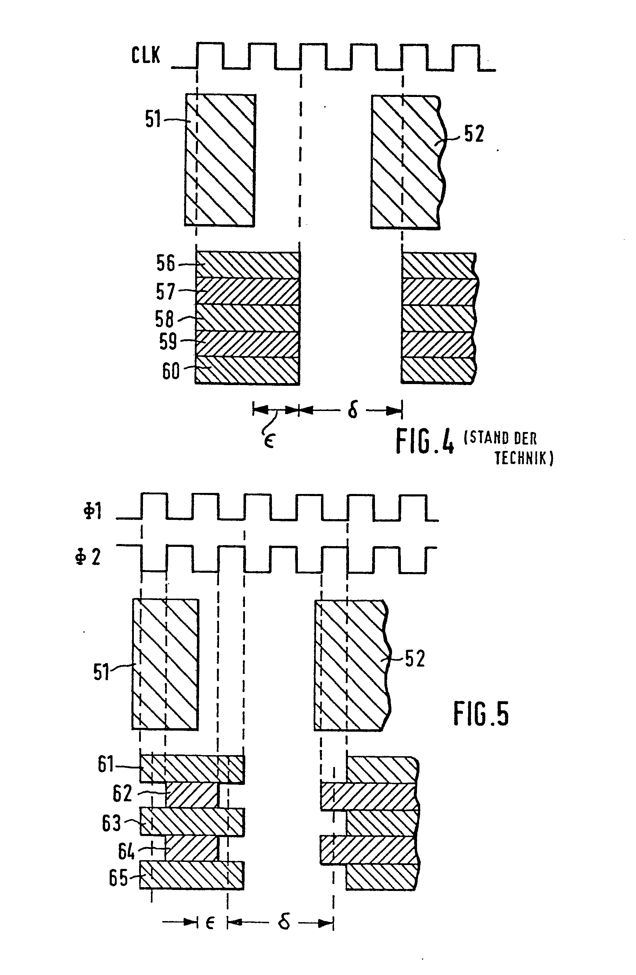

In Fig. 4 ist die Art und Weise dargestellt, in der Veränderungen in der Breite und im räumlichen Abstand der Punkte in einem bekannten System entstehen können, welches ein einziges Taktsignal CLK zum Abtasten des Videosignals während aufeinanderfolgender Abtastlinien verwendet. In diesem Beispiel werden zwei dunkle Flächen 51, 52 abgetastet und sind fünf Abtastlinien 56–60 im Ausgabebild dargestellt. Es wird vorausgesetzt, dass die Taktimpulse einer Abtastgrösse von 0,0254 mm (1 mil) entsprechen und dass der Schreibstrahl, ansprechend auf positive Übergänge im Taktsignal, eingeschaltet ist. Sobald der Schreibstrahl eingeschaltet ist, verbleibt er in diesem Zustand, bis der nächste positive Übergang im Taktsignal auftritt. Da die Grenzlinien der dunklen Flächen in bezug auf die Taktimpulse in zufälligen Positionen auftreten, werden im Ausgabebild die Grenzlinien um eine Distanz ε versetzt, die sich zwischen 0 bis 0,0254 mm verändert, abhängig davon, an welcher Stelle eine bestimmte Grenzlinie gerade auftritt. Die Distanz θ zwischen benachbarten Grenzlinien kann beispielsweise bis zu 0,0254 mm entlang der Abtastlinie sich verändern. Wie in Fig. 4 dargestellt ist, können diese Grenzlinienfehler eine zu beachtende Aufweitung der dunklen Flächen im Ausgangsbild ergeben, die in einer Moiré-Interferenz resultieren können.

In Fig. 5 werden die gleichen dunklen Flächen 51, 52 abgetastet und es sind Teile von fünf Abtastlinien 61–65 im Ausgabebild dargestellt. Wie zuvor erläutert wurde, entspricht jeder der Pulse in den Taktsignalen Φ1, Φ2 einer Abtastgrösse von 0,0254 mm (1 mil) und diese Taktsignale sind um 180° phasenverschoben. Bei dem gezeigten Beispiel wird das Videosignal in Übereinstimmung mit dem Taktsignal Φ1 für alle ungeraden numerierten Abtastlinien und mit dem Taktsignal Φ2 für alle geraden numerierten Abtastlinien abgetastet. Dies bedeutet, dass die geraden numerierten Linien gegenüber den ungeraden numerierten Linien um 0,0127 mm (0,5 mil) versetzt sind. Innerhalb jeder Abtastlinie beträgt der maximale Grenzlinienfehler ε weiterhin 0,0254 mm und die maximale Abweichung in der Distanz θ zwischen den Grenzlinien ist gleichfalls 0,0254 mm. Wegen der Verschiebung von 0,0127 mm zwischen benachbarten Abtastlinien wird jedoch der maximale mittlere Grenzlinienfehler für zwei benachbarte Abtastlinien auf 0,0190 mm (0,75 mil) reduziert und die maximale Abweichung in der Distanz zwischen den Grenzlinien beträgt nur 0,0127 mm (0,5 mil). Auf diese Weise wird der unerwünschte Ansteig in der Punktbreite, der Anlass für Moiré-Interferenzen gibt, wesentlich reduziert und die Moiré-Muster in wirksamer Weise aus dem Ausgabebild eliminiert. Wesentlich ist dabei, dass diese Eliminierung der Moiré-Interferenz ohne jeden Anstieg in der Abtastfrequenz für das Videosignal erreicht wird.

Mit der Erfindung wird u. a. der Vorteil erzielt, dass gerasterte Bilder mit dem neuen und verbesserten Lasergraviersystem erhalten werden, bei denen Moiré-Interferenzen weitgehend vermieden werden. Während nur eine bestimmte bevorzugte Ausführungsform des verbesserten Abbildungssystems im einzelnen beschrieben wurde, ist es für den Fachmann ersichtlich, dass bei dem Ausführungsbeispiel bestimmte Veränderungen vorgenommen werden können, ohne von dem in den Patentansprüchen offenbarten Erfindungsgedanken abzuweichen.

## Patentansprüche

1. Verfahren zum Abbilden einer Vorlage (11) auf einem Ausgabemedium (41), mit den folgenden Verfahrensschritten: Abtasten der Vorlage (11) entlang aufeinanderfolgender Abtastzeilen; Erzeugen eines Videosignales in Abhängigkeit von der abgetasteten Vorlage (11); Erzeugen von ersten und zweiten gegeneinander um eine vorbestimmte Phase versetzten Taktsignalen ($\Phi_1$, $\Phi_2$) gleicher Frequenz; taktweises Ausgeben des Videosignales in aufeinanderfolgenden Abtastzeilen in Abhängigkeit von dem ersten bzw. zweiten Taktsignal ($\Phi_1$, $\Phi_2$) als Ausgangssignale, die von Abtastzeile zu Abtastzeile um die Phase versetzt sind; Ablenken eines Schreibstrahles entlang aufeinanderfolgender Zeilen des Ausgabemediums (41); Modulieren des Schreibstrahles in aufeinanderfolgenden Zeilen in Abhängigkeit von den Ausgangssignalen derart, dass die Vorlage (11) auf dem Ausgabemedium (41) in einer Weise abgebildet wird, bei der benachbarte, die Abbildung darstellende Zeilen gegeneinander um die Phase versetzt sind, dadurch gekennzeichnet, dass zusammen mit der Vorlage (11) eine Bezugsmaske (26) abgetastet wird, dass ein Referenzsignal in Abhängigkeit von der Position der Abtastung erzeugt wird, und dass die Taktsignale ($\Phi_1$, $\Phi_2$) von dem Referenzsignal abgeleitet werden.

2. Verfahren nach Anspruch 1, dadurch gekennzeichnet, dass die Ausgangssignale in Abhängigkeit von den Taktsignalen ($\Phi_1$, $\Phi_2$) gespeichert und ausgelesen werden.

3. Verfahren nach Anspruch 1 oder 2, dadurch gekennzeichnet, dass die Phase 180° beträgt.

4. Vorrichtung zum Abbilden einer Vorlage (11) auf einem Ausgabemedium (41) mit einer ersten Einrichtung (14–18) zum Abtasten der Vorlage (11) entlang aufeinanderfolgender Abtastzeilen, mit Mitteln (19) zum Erzeugen eines Videosignales in Abhängigkeit von der abgetasteten Vorlage (11), mit einem Taktgenerator (26–29) zum Erzeugen zweier gegeneinander um eine vorbestimmte

Phase versetzter Taktsignale ($\Phi_1$, $\Phi_2$) gleicher Frequenz, mit Mitteln (21, 22, 31–33) zum taktweisen Ausgeben des Videosignales in aufeinanderfolgenden Abtastzeilen in Abhängigkeit von dem ersten bzw. zweiten Taktsignal ($\Phi_1$, $\Phi_2$) als Ausgangssignale, die von Abtastzeile zu Abtastzeile um die Phase versetzt sind, mit einer Abtastvorrichtung (39) zum Ablenken eines Schreibstrahles entlang aufeinanderfolgender Zeilen des Ausgabemediums (41) und mit einem Modulator (38) zum Modulieren des Schreibstrahles in aufeinanderfolgenden Zeilen in Abhängigkeit von den Ausgangssignalen derart, dass die Vorlage (11) auf dem Ausgabemedium (41) in einer Weise abgebildet wird, bei der benachbarte, die Abbildung darstellende Zeilen gegeneinander um die Phase versetzt sind, dadurch gekennzeichnet, dass eine Bezugsmaske (26) und eine zweite Einrichtung (16, 17) zum Abtasten der Bezugsmaske (26) zusammen mit dem Abtasten der Vorlage (11) vorgesehen sind, wobei die zweite Einrichtung ein Referenzsignal in Abhängigkeit von der Position der Abtastung erzeugt, und dass das Referenzsignal dem Taktgenerator (26–29) zum Erzeugen der Taktsignale ($\Phi_1$, $\Phi_2$) zugeführt wird.

5. Vorrichtung nach Anspruch 4, dadurch gekennzeichnet, dass die Mittel (31–33) zum taktweisen Ausgeben des Videosignales Pufferspeicher (21, 22) für die Ausgangssignale umfassen, und dass eine Pufferauswahlschaltung (32) die Ausgangssignale von aufeinanderfolgenden Abtastzeilen aus den Pufferspeichern (21, 22) in Abhängigkeit von den Taktsignalen ($\Phi_1$, $\Phi_2$) ausliest.

6. Vorrichtung nach Anspruch 4 oder 5, dadurch gekennzeichnet, dass das Ausgabemedium (41) eine Druckplatte und der Schreibstrahl ein Laserstrahl sind.

7. Vorrichtung nach einem der Ansprüche 4 bis 6, dadurch gekennzeichnet, dass die Bezugsmaske (26) mit einer alternierenden Anordnung von Balken versehen ist.

8. Vorrichtung nach einem der Ansprüche 4 bis 7, dadurch gekennzeichnet, dass die zweite Einrichtung (16, 17) zum Abtasten der Bezugsmaske (26) an eine Vervielfachereinrichtung (27) zum Vervielfachen der Frequenz des Ausgangssignales der zweiten Einrichtung (16, 17) verbunden ist, dass die Vervielfachereinrichtung (17 und 20) mit zwei hintereinandergeschalteten Flip-Flops (28, 29) verbunden ist, die so miteinander verschaltet sind, dass zwei um 180° versetzte Taktsignale ($\Phi_1$, $\Phi_2$) einer Frequenz entstehen, die der halben Ausgangsfrequenz der Vervielfachereinrichtung (27) entspricht.

## Claims

1. Method for the imaging of an original (11) on an output medium (41) with the following steps: scanning the original (11) along successive scan lines; producing a video signal as a function of the scanned original (11); producing first and second clock signals ($\Phi_1$, $\Phi_2$)

of the same frequency displaced with respect to one another by a given phase;

timed output of the video signal in successive scan lines as a function of the first or second clock signals ($\Phi_1$, $\Phi_2$) as output signals, which are phased displaced between the individual scan lines;

scanning a writing beam along successive lines of the output medium (41);

modulating the writing beams in successive lines as a function of the output signals in such a way that the original (11) is imaged on the output medium (41) in such a way that adjacent lines representing the image are displaced by the phase with respect to one another, characterized in that together with the original (11) is scanned a reference mask (26), that a reference signal is produced as a function of the scan position and that the clock signals ($\Phi_1$, $\Phi_2$) are derived from the reference signal.

2. Method according to claim 1, characterized in that the output signals are stored and read out as a function of the clock signals ($\Phi_1$, $\Phi_2$).

3. Method according to claims 1 or 2, characterized in that the phase is 180°.

4. Apparatus for imaging an original (11) on an output medium (41) with a first device (14–18) for scanning the original (11) along successive scan lines, with means (19) for producing a video signal as a function of the scanned original (11), with a clock generator (26–29) for producing two clock signals ($\Phi_1$, $\Phi_2$) of the same frequency and displaced with respect to one another by a given phase, with means (21, 22, 31–33) for the timed output of the video signal in successive scan lines as a function of the first or second clock signals ($\Phi_1$, $\Phi_2$) as output signals displaced by the phase between individual scan lines, with a scanning means (39) for scanning a writing beam along successive lines of the output medium (41) and with a modulator (38) for modulating the writing beam in successive lines as a function of the output signals in such a way that the original (11) is imaged on the output medium (41) so that adjacent lines representing the image are displaced with respect to one another by the phase, characterized in that a reference mask (26) and a second device (16, 17) for scanning the reference mask (26) together with the scanning of the original (11) are provided, the second device producing a reference signal as a function of the scan position and that the reference signal is supplied to the clock generator (26–29) for producing clock signals ($\Phi_1$, $\Phi_2$).

5. Apparatus according to claim 4, characterized in that the means (31–33) for the timed output of the video signal comprises buffer stores (21, 22) for the output signals and that a buffer selection circuit (32) reads out from the buffer stores (21, 22) the output signals of successive scan lines as a function of the clock signals ($\Phi_1$, $\Phi_2$).

6. Apparatus according to claims 4 or 5, characterized in that the output medium (41) is a printing plate and the writing beam a laser beam.

7. Apparatus according to one of the claims 4 to 6, characterized in that the reference mask (26) is provided with an alternating array of bars.

8. Apparatus according to one of the claims 4 to 7, characterized in that the second device (16, 17) for scanning the reference mask (26) is connected to a multiplier (27) for multiplying the frequency of the output signal of the second device (16, 17), that the multiplier (17, 20) is connected to two series-connected flip-flops (28, 29), which are so wired together that two clock signals ($\Phi_1$, $\Phi_2$) displaced by 180° are obtained, which have a frequency which is half the output frequency of multiplier (27).

**Revendications**

1. Procédé pour la reproduction d'un original (11) sur un support d'enregistrement (41), avec les étapes opératoires suivantes:

analyse de l'original (11) le long de lignes d'analyse successives;

production d'un signal vidéo en relation avec l'original analysé (11);

production d'un premier et d'un second signal d'horloge ($\Phi_1$, $\Phi_2$) de même fréquence et décalés d'une phase prédéterminée l'un par rapport à l'autre;

enregistrement synchronisé du signal vidéo dans des lignes d'analyse successives en fonction du premier et du second signal d'horloge ($\Phi_1$, $\Phi_2$) respectivement comme des signaux de sortie qui sont décalés de la phase d'une ligne d'analyse à la suivante;

déviation d'un faisceau d'écriture le long de lignes successives du support d'enregistrement (41);

modulation du faisceau d'écriture dans des lignes successives en fonction des signaux de sortie de telle sorte que l'original (11) soit reproduit sur le support d'enregistrement (41) de telle façon que les lignes adjacentes représentant l'image reproduite soient décalées de la phase l'une par rapport à l'autre,

caractérisé en ce qu'un masque de référence (26) est analysé en même temps que l'original (11), en ce qu'un signal de référence est produit en fonction de la position d'analyse et en ce que les signaux d'horloge ($\Phi_1$, $\Phi_2$) sont dérivés du signal de référence.

2. Procédé selon la revendication 1, caractérisé en ce que les signaux de sortie sont mémorisés et lus en fonction des signaux d'horloge ($\Phi_1$, $\Phi_2$).

3. Procédé selon la revendication 1 ou 2, caractérisé en ce que la phase s'élève à 180°.

4. Appareil pour reproduire un original (11) sur un support d'enregistrement (41), comportant un premier dispositif (14–18) pour analyser l'original (11) le long de lignes d'analyse successives, des moyens (19) pour produire un signal vidéo en relation avec l'original analysé (11), un générateur d'horloge (26–29) pour produire deux signaux d'horloge ($\Phi_1$, $\Phi_2$) de même fréquence et décalés d'une phase prédéterminée l'un par rapport à l'autre, des moyens (21, 22, 31–33) pour l'enregistrement synchronisé du signal vidéo dans des lignes d'analyse successives en fonction du premier et du second signal d'horloge ($\Phi_1$, $\Phi_2$) respectivement comme signaux de sortie qui sont décalés de la phase d'une ligne d'analyse à la suivante, un dispositif d'analyse (39) pour dévier un faisceau d'écriture le long de lignes successives du support d'enregistrement (41) et un modulateur (38) pour moduler le faisceau d'écriture dans des lignes successives en fonction des signaux de sortie de telle sorte que l'original (11) soit reprdouit sur le support d'enregistrement (41) d'une manière telle que des lignes adjacentes représentant l'image reproduite soient décalées de la phase l'une par rapport à l'autre, caractérisé en ce qu'un masque de référence (26) et un second dispositif (16, 17) pour analyser le masque de référence (26) interviennent en même temps que l'analyse de l'original (11), le second dispositif produisant un signal de référence en fonction de la position d'analyse, et en ce que le signal de référence est appliqué au générateur d'horloge (26–29) pour produire les signaux d'horloge ($\Phi_1$, $\Phi_2$).

5. Appareil selon la revendication 4, caractérisé en ce que les moyens (31–33) pour l'enregistrement synchronisé du signal vidéo comportent des mémoires-tampon (21, 22) pour les signaux de sortie, et en ce qu'un circuit de sélection de tampon (32) effectue la lecture des signaux de sortie de lignes d'analyse successives dans les mémoires-tampon (21, 22) en fonction des signaux d'horloge ($\Phi_1$, $\Phi_2$).

6. Appareil selon la revendication 4 ou 5, caractérisé en ce que le support d'enregistrement (41) est une plaque d'impression et en ce que le faisceau d'écriture est un faisceau laser.

7. Appareil selon l'une des revendications 4 à 6, caractérisé en ce que le masque de référence (26) est pourvu d'une disposition alternée de barres.

8. Appareil selon l'une des revendications 4 à 7, caractérisé en ce que le second dispositif (16, 17) pour l'analyse du masque de référence (26) est relié à un dispositif multiplicateur (27) pour multiplier la fréquence du singal de sortie du second dispositif (16, 17), en ce que le dispositif multiplicateur (17 et 20) est relié à deux bascules reliées en série (28, 29) et qui coopèrent l'une avec l'autre de façon que deux signaux d'horloge ($\Phi_1$, $\Phi_2$) décalés de 180° soient produits à une fréquence qui correspond à la moitié de la fréquence de sortie du dispositif multiplicateur (27).

FIG.1

ABTASTVOR-
RICHTUNG  16

LASER  14

BEZUGSMASKE  26

VERVIEL-
FACHEREIN-
RICHTUNG  27

FOTO-
VERVIEL-
FACHER  19

PUFFER-
AUSWAHL-
SCHALTUNG  32

D  FLIP-
FLOP  Q
CLK  Q̄
28

D  FLIP-
FLOP  Q
CLK
29

$\Phi 1$

$\Phi 2$

TAKT-
AUSWAHL-
SCHALTUNG  31

PUFFER  21

PUFFER  22

33

0 038 515

FIG.2

FIG.3

FIG.4 (STAND DER TECHNIK)

FIG.5